# EUROPEAN PATENT APPLICATION

(11) **EP 4 760 821 A1**
(43) Date of publication of application: **17.06.2026**
(21) Application number: 24891818.7
(22) Date of filing: 15.11.2024
(51) Int. Cl.: H01M 4/62, H01M 4/13, H01M 4/139, H01M 10/052, H01M 4/02

(54) **ELECTRODE, LITHIUM SECONDARY BATTERY, AND METHOD FOR MANUFACTURING ELECTRODE**

(30) Priority: 17.11.2023 KR 20230159800
(71) Applicant: LG Energy Solution, Ltd., Seoul 07335 (KR)
(72) Inventor: PARK, Sang Hyun, Daejeon 34122 (KR); KIM, Cho Won, Daejeon 34122 (KR); PARK, Joo Yong, Daejeon 34122 (KR); KIM, Young Jae, Daejeon 34122 (KR); LIM, Han Min, Daejeon 34122 (KR); KIM, Tae Gon, Daejeon 34122 (KR)
(74) Representative: Hoffmann Eitle
(86) International application number: PCT/KR2024/018117
(87) International publication number: WO 2025/105872

(57) **Abstract**

The present invention relates to an electrode including an electrode current collector, and an electrode active material layer positioned on the electrode current collector, wherein the electrode active material layer includes an electrode active material, a single-walled carbon nanotube structure, a first dispersant containing a hydrogenated nitrile-based copolymer, and a second dispersant containing a fluorine-based polymer, the single-walled carbon nanotube structure has an average diameter of 60 nm to 300 nm, and an interface resistance between the electrode active material layer and the electrode current collector, measured by a multi-probe resistance (MP resistance) measurement method, is 0.43 Ω·cm² or less.

## Description

### TECHNICAL FIELD

### Cross-reference to Related Applications

This application claims priority from Korean Patent Application No. 10-2023-0159800, filed on November 17, 2023, the disclosure of which is incorporated by reference herein.

### Technical Field

The present invention relates to an electrode, a lithium secondary battery, and a preparation method of the electrode, and more particularly, to an electrode having excellent cell resistance characteristics and lifetime characteristics, a lithium secondary battery, and a preparation method of the same.

### BACKGROUND ART

Due to the increase in technological development and demand for mobile devices, demand for secondary batteries as a source of energy is rapidly increasing. Among these secondary batteries, a lithium secondary battery, which has high energy density and high voltage, long cycle lifetime, and high self-discharging rate, is being commercialized and widely used. In addition, as an electrode for this high-capacity lithium secondary battery, research on a method of increasing the electrode density to prepare an electrode with high energy density per unit volume is being actively conducted.

In general, the high-density electrode is formed by molding electrode active material particles of several to tens of µm in size using a high-pressure press, and during the molding process, the particles may be deformed, and a space between the particles may be reduced, so that permeability of an electrolyte solution is likely to decrease.

To solve the above problems, in the preparing of the electrode, a conductive material having excellent electrical conductivity and strength is being used. Since the conductive material is positioned between the electrode active materials, even during the molding process, micro pores between the active material particles may be maintained, making it possible for the electrolyte solution to easily permeate therebetween, and the electrical conductivity may be excellent, so that the resistance in the electrode may decrease. Among these conductive materials, a carbon nanotube, which is a fibrous carbon-based conductive material capable of further decreasing electrode resistance by forming an electrically conductive path in the electrode, is increasingly used.

A carbon nanotube, a type of micro carbon fibers, is a tube-type carbon fiber with a diameter of 1 µm or less, and is expected to be applied to a variety of fields and put to practical uses due to high conductivity, tensile strength, and heat resistance attributing to its unique structure. However, the carbon nanotube has a problem of low dispersibility caused by strong van der Waals force to each other, due to high specific surface area, and a problem of occurrence of an aggregation phenomenon.

At this time, in case that carbon nanotubes present in the electrode are not in an evenly dispersed state in the lithium secondary battery, a path, through which a current flows, fails to be locally formed in the electrode, causing increase of resistance in the battery, or a current concentration phenomenon occurs, causing a problem of rather deteriorating performance and safety of the battery.

Therefore, it is required to develop an electrode capable of achieving high-energy density by using carbon nanotubes as a conductive material, and also capable of solving the problems of increased resistance in a battery and reduced battery performance caused by the use of carbon nanotubes.

### DISCLOSURE OF THE INVENTION

### TECHNICAL PROBLEM

The present invention is to solve the above problems by providing an electrode including a single-walled carbon nanotube structure providing high energy density and also having excellent output characteristics and lifetime characteristics due to improved initial resistance characteristics of a battery, a lithium secondary battery, and a preparation method of the electrode.

### TECHNICAL SOLUTION

[1] The present invention provides an electrode including an electrode current collector and an electrode active material layer positioned on the electrode current collector, wherein the electrode active material layer includes an electrode active material, a single-walled carbon nanotube structure, a first dispersant containing a hydrogenated nitrile-based copolymer, and a second dispersant containing a fluorine-based polymer, and the single-walled carbon nanotube structure has an average diameter of 60 nm to 300 nm, and an interface resistance between the electrode active material layer and the electrode current collector, which is measured by a multi-probe resistance (MP resistance) measurement method, is 0.43 Ω·cm² or less.
[2] The present invention provides the electrode of [1] above, wherein the hydrogenated nitrile-based copolymer has a weight average molecular weight of 5,000 g/mol to 200,000 g/mol.
[3] The present invention provides the electrode of [1] or [2] above, wherein the hydrogenated nitrile-based copolymer is a hydrogenated nitrile butadiene rubber.
[4] The present invention provides the electrode of at least one of [1] to [3] above, wherein the fluorine-based polymer is one or more selected from the group consisting of poly(vinylidene fluoride) (PVDF) and poly(vinylidene fluoride-co-hexafluoropropylene) (PVdF-HFP) copolymer.
[5] The present invention provides the electrode of at least one of [1] to [4] above, wherein the second dispersant includes carboxylic acid, and the carboxylic acid is included in an amount of 0.1 parts by weight to 2.0 parts by weight on the basis of 100 parts by weight of the second dispersant.
[6] The present invention provides the electrode of at least one of [1] to [5] above, wherein the second dispersant has a weight average molecular weight of 600,000 g/mol to 1,500,000 g/mol.
[7] The present invention provides the electrode of at least one of [1] to [6] above, wherein the single-walled carbon nanotube structure is included in an amount of 0.001 wt% to 0.1 wt% on the basis of a total weight of the electrode active material layer.
[8] The present invention provides the electrode of at least one of [1] to [7] above, wherein the first dispersant is included in an amount of 0.0001 wt% to 0.05 wt% on the basis of a total weight of the electrode active material layer.
[9] The present invention provides the electrode of at least one of [1] to [8] above, wherein the second dispersant is included in an amount of 0.001 wt% to 0.25 wt% on the basis of a total weight of the electrode active material layer.
[10] The present invention provides a lithium secondary battery including a positive electrode; a negative electrode; an electrolyte; and a separator, wherein at least one of the positive electrode or the negative electrode is the electrode according to any one of [1] to [9] above.
[11] The present invention provides a preparation method of an electrode including preparing a conductive material dispersion liquid containing a bundle-type single-walled carbon nanotube, a first dispersant, a second dispersant, and a dispersion medium (S1); and applying an electrode slurry containing the conductive material dispersion liquid and an electrode active material onto a current collector to prepare an electrode including an electrode active material layer (S2), wherein the first dispersant includes a hydrogenated nitrile-based copolymer, the second dispersant includes a fluorine-based polymer, the electrode active material layer includes a single-walled carbon nanotube structure, the first dispersant, the second dispersant, and the electrode active material, and the single-walled carbon nanotube structure has an average diameter of 60 nm to 300 nm.
[12] The present invention provides the preparation method of an electrode of [11] above, wherein S1 above includes preparing a first dispersion liquid containing the bundle-type single-walled carbon nanotube, the first dispersant, and the dispersion medium (S1-1); and preparing a conductive material dispersion liquid in which the second dispersant is mixed in the first dispersion liquid (S1-2).
[13] The present invention provides the preparation method of an electrode of [11] above, wherein S1 above includes preparing a first dispersion liquid containing the bundle-type single-walled carbon nanotube, the first dispersant, and the dispersion medium (S1-1); preparing a conductive material dispersion liquid in which the second dispersant is mixed in the first dispersion liquid (S1-2); and passing the conductive material dispersion liquid through a high-pressure homogenizer (S1-3). [14] The present invention provides the preparation method of an electrode of [12] or [13] above, wherein the first dispersion liquid and the conductive material dispersion liquid are mixed and prepared using an inline mixer.
[15] The present invention provides the preparation method of an electrode of at least one of [12] to [14] above, wherein S1-1 above includes agitating the first dispersion liquid at 500 rpm to 3000 rpm for 15 minutes to 60 minutes.
[16] The present invention provides the preparation method of an electrode of at least one of [12] to [15] above, wherein S1-2 above includes agitating the conductive material dispersion liquid at 500 rpm to 3000 rpm for 15 minutes to 60 minutes.
[17] The present invention provides the preparation method of an electrode of at least one of [12] to [16] above, wherein S1-3 above includes applying a pressure of 100 bar to 2500 bar to introduce the conductive material dispersion liquid into an inlet part of a high-pressure homogenizer and pass the conductive material dispersion liquid through a microchannel.

### ADVANTAGEOUS EFFECTS

An electrode according to the present invention is characterized by including a single-walled carbon nanotube structure, a first dispersant containing a hydrogenated nitrile-based copolymer, and a second dispersant containing a fluorine-based polymer, satisfying a particular range of an average diameter of the single-walled carbon nanotube structure, and at the same time, by satisfying a particular range of the interface resistance of an electrode active material layer and an electrode current collector. According to the present invention, when the average diameter of the single-walled carbon nanotube structure falls within the particular range, and at the same time, the interface resistance of the electrode active material layer and the electrode current collector falls within the particular range, high-energy density may be achieved, and at the same time, dispersibility of the single-walled carbon nanotubes may be improved, and a conductive path may be uniformly formed in the electrode active material layer on the whole. Accordingly, initial resistance characteristics of a battery may be improved, and output characteristics and lifetime characteristics of the battery may thus be improved.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used in this specification is only used to illustrate example embodiments, and is not intended to limit the present invention. The singular forms are intended to include the plural forms as well unless the context clearly indicates otherwise.

It will be further understood that the terms 'include', 'provide', 'have' or the like, when used in this specification, specify the presence of stated features, integers, steps, elements, or a combination thereof, but do not preclude the presence or addition of one or more other features, integers, steps, elements, or a combination thereof.

In the present invention, unless otherwise defined, the 'bundle-type single-walled carbon nanotube' refers to single-walled carbon nanotubes in a secondary form of a bundle in which a plurality of carbon nanotube units is arranged side by side in the length directional axes of the units having the substantially same orientation, which refers to a state where a conductive material has not gone through a dispersion process in the present invention. In general, the bundle-type single-walled carbon nanotube refers to a large agglomerate having no flexibility with a micro diameter which has not gone through a dispersion process, and may refer to, for example, the single-walled carbon nanotubes in a bundled agglomerate having an average diameter of 1 µm or greater.

In the present invention, the 'single-walled carbon nanotube structure' is a structure formed by a plurality of single-walled carbon nanotube units bonded to each other, and refers to a structure in a state obtained when the bundle-type carbon nanotube has gone through a dispersion process. More particularly, in the carbon nanotube structure, the single-walled carbon nanotube units may be arranged side by side (a flexible cylindrical structure in which long sides of the units are combined parallel to each other) in the length directional axes of the units having the substantially same orientation to form the carbon nanotube structure, and accordingly, the carbon nanotube structure may have a rope or bundle form having a nanoscale diameter.

In the present invention, the 'single-walled carbon nanotube unit' refers to one strand of single-walled carbon nanotube constituting the bundle-type single-walled carbon nanotube or the single-walled carbon nanotube structure.

In the present invention, the "average diameter of single-walled carbon nanotube structure" may be measured by observing an image of an electrode including the carbon nanotube structure through a scanning electron microscope (SEM). In particular, the electrode including the carbon nanotube structure may be observed through a scanning electron microscope, and the arithmetic average values of top 100 single-walled carbon nanotube structures and bottom 100 single-walled carbon nanotube structures in order of diameter may be calculated to measure the average diameter of the single-walled carbon nanotube structure.

In the present invention, "Dₙ" refers to a particle diameter at n% cumulative volume in a cumulative volume particle size distribution of powder to be measured. That is, D₁₀ refers to a particle diameter at 10% cumulative volume, D₅₀ refers to a particle diameter at 50% cumulative volume, and D₉₀ refers to a particle diameter at 90% cumulative volume. Dₙ above may be measured using a laser diffraction method. For example, after the powder to be measured (that is, positive electrode active material powder or porous carbon powder) is dispersed in a dispersion medium, the dispersion medium is introduced into a commercial laser diffraction particle size measurement instrument (e.g., Microtrac MT 3000) and irradiated with ultrasonic waves of about 28 kHz at an output of 60 W, and then a cumulative volume particle size distribution graph is obtained, and using the cumulative volume particle size distribution graph, the particle diameter in the corresponding cumulative volume may then be calculated therefrom to measure Dₙ.

In the present invention, the "interface resistance between an electrode active material layer and an electrode current collector measured by a multi-probe resistance (MP resistance) measurement method" may be measured using a multi-probe resistance measurement instrument (manufacturer: Hioki, product: RM2510). In particular, the "interface resistance between an electrode active material layer and an electrode current collector measured by a multi-probe resistance (MP resistance) measurement method" may be obtained as the average value of the interface resistance values between the electrode active material layer and the electrode current collector, the values obtained by evenly dispersing several to tens of voltage and current probes on a surface of the electrode active material layer and passing a constant current on the surface of the electrode active material layer to measure the potential distribution generated on the surface.

An electrode, a lithium secondary battery, and a preparation method of the electrode, according to the present invention, may include at least one of components disclosed below, and any combination of the components technically possible may be included.

Hereinafter, the present invention will be described in more detail.

### Electrode

According to an embodiment, an electrode according to the present invention includes an electrode current collector and an electrode active material layer positioned on the electrode current collector, wherein the electrode active material layer includes an electrode active material, a single-walled carbon nanotube structure, a first dispersant containing a hydrogenated nitrile-based copolymer, and a second dispersant containing a fluorine-based polymer, and the single-walled carbon nanotube structure has an average diameter of 60 nm to 300 nm, and an interface resistance between the electrode active material layer and the electrode current collector, which is measured by a multi-probe resistance (MP resistance) measurement method, is 0.43 Ω·cm² or less.

Recently, as lithium secondary batteries receive attention as batteries for electric vehicles, etc., energy density, output characteristics, and lifetime characteristics of the lithium secondary battery are considered as important performance.

Among these, in order to increase the energy density, attempts to increase the amount of an electrode active material in the electrode active material layer have continued, and to increase the amount of the electrode active material, the amount of a conductive material or a binder needs to be lowered. Accordingly, there are recent attempts to apply single-walled carbon nanotubes as the conductive material which is high in electrical conductivity only with a small amount.

However, due to high specific surface area, the single-walled carbon nanotubes aggregate easily with each other, so that a conductive path may not be evenly formed in the electrode, rather causing deterioration of battery resistance characteristics, and thus, there is a problem that output characteristics and lifetime characteristics of the battery are rather reduced.

Therefore, as a result of continuous research conducted in order to develop an electrode not causing the problem of deterioration of resistance characteristics in the battery despite application of single-walled carbon nanotubes, the present inventors discovered that, when the battery is applied with an electrode having an electrode active material layer including a single-walled carbon nanotube structure, a first dispersant containing a hydrogenated nitrile-based copolymer, and a second dispersant containing a fluorine-based polymer, where the single-walled carbon nanotube structure has an average diameter of 60 to 300 nm and an interface resistance between the electrode active material layer and the electrode current collector, measured by a multi-probe resistance measurement method, is 0.43 Ω·cm² or less, high-energy density may be achieved, and also, resistance characteristics of the entire battery may be improved, so that output characteristics become excellent and lifetime characteristics become excellent, and therefore, the present inventors have completed the present invention.

In particular, when the electrode active material layer includes the first dispersant containing a hydrogenated nitrile-based copolymer and the second dispersant containing a fluorine-based polymer together with the single-walled carbon nanotube structure, aggregation of the single-walled carbon nanotubes may be suppressed, and the single-walled carbon nanotubes may be evenly dispersed in the electrode active material layer, and the conductive path may thus be evenly formed on the whole in the electrode.

According to the present inventors, even though the average diameter of the single-walled carbon nanotube structure falls within the range of 60 to 300 nm, if the interface resistance between the electrode active material layer and the electrode current collector, measured by the multi-probe resistance measurement method, is greater than 0.43 Ω·cm², the single-walled carbon nanotube structures may not be aggregated with each other, but a conductive network may not be uniformly formed on the whole in the electrode, so that a current may be concentrated to a particular region of the interface of the electrode current collector and the electrode active material layer, and accordingly, the resistance characteristics of the battery may not be sufficiently improved. Alternatively, even though the interface resistance between the electrode active material layer and the electrode current collector, measured by the multi-probe resistance measurement method, is 0.43 Ω·cm² or less, if the average diameter of the single-walled carbon nanotube structure is less than 60 nm, the single-walled carbon nanotubes may not be sufficiently connected to each other, so that a movement path of electrons may be disconnected in the electrode active material layer, and the single-walled carbon nanotubes may be aggregated with each other to limit the flow of electrons, and if the average diameter of the single-walled carbon nanotube structure is greater than 300 nm, with reduced flexibility, the single-walled carbon nanotubes may be difficult to be evenly distributed between the electrode active material particles, and may limit the movement path of electrons, and consequently, the resistance characteristics of the battery may not be sufficiently improved.

Hereinafter, each component of the present invention will be described in detail.

The electrode includes an electrode current collector, and an electrode active material layer positioned on the electrode current collector. In particular, the electrode may include an electrode current collector; and an electrode active material layer positioned on one side or both sides of the current collector.

The electrode current collector is not particularly limited as long as it does not cause chemical change in a battery, and has high conductivity. In particular, the electrode current collector may include at least one selected from the group consisting of copper, stainless steel, aluminum, nickel, titanium, calcined carbon, and an aluminum-cadmium alloy, and particularly, may include aluminum.

The electrode current collector may generally have a thickness of 3 to 500 µm. The electrode current collector may also have microscopic irregularities on a surface to strengthen binding force to the electrode active material. For example, the electrode current collector may be used in various forms including a film, a sheet, a foil, a net, a porous body, a foam body, a non-woven fabric, etc.

The electrode active material layer includes an electrode active material; a single-walled carbon nanotube structure; a first dispersant containing a hydrogenated nitrile-based copolymer; and a second dispersant containing a fluorine-based polymer.

The electrode active material may be a positive electrode active material or a negative electrode active material generally used in the relevant art, and the type is not particularly limited.

For example, as the positive electrode active material, a compound capable of reversibly intercalating and deintercalating lithium, such as a lithium transition metal composite oxide including at least one transition metal of nickel, cobalt, manganese, and aluminum, and lithium, may be used.

More particularly, the lithium transition metal composite oxide may include a lithium manganese-based oxide (for example, LiMnO₂, LiMn₂O₄), a lithium cobalt-based oxide (for example, LiCoO₂), a lithium nickel-based oxide (for example, LiNiO₂), a lithium nickel manganese-based oxide (for example, LiNi_{1-Y}Mn_{Y}O₂ (where, 0<Y<1), LiMn_{2-z}Ni_{z}O₄ (where, 0<Z<2)), a lithium nickel cobalt-based oxide (for example, LiNi_{1-Y1}Co_{Y1}O₂ (where, 0<Y1<1)), a lithium manganese cobalt-based oxide (for example, LiCo_{1-Y2}Mn_{Y2}O₂ (where, 0<Y2<1), LiMn_{2-z1}Co_{z1}O₄ (where, 0<Z1<2), etc.), a lithium nickel manganese cobalt-based oxide (for example, Li(NiₚCo_{q}Mnᵣ₁)O₂ (where, 0<p<1, 0<q<1, 0<r1<1, and p+q+r1=1) or Li(Niₚ₁Co_{q1}Mnᵣ₂)O₄ (where, 0<p1<2, 0<q1<2, 0<r2<2, and p1+q1+r2=2)), or a lithium nickel cobalt transition metal (M) oxide (for example, Li(Niₚ₂Co_{q2}Mnᵣ₃M_{S2})O₂ (where, M is selected from the group consisting of Al, Fe, V, Cr, Ti, Ta, Mg, and Mo, and p2, q2, r3, and s2 are each independently an atomic fraction of an atom, where 0<p2<1, 0<q2<1, 0<r3<1, 0<s2<1, and p2+q2+r3+s2=1)), and any one thereof or a compound of two or more thereof may be included. Among these, in terms of improving capacity characteristics and stability of a battery, the lithium transition metal composite oxide may include LiCoO₂, LiMnO₂, LiNiO₂, a lithium nickel manganese cobalt oxide (for example, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂,), a lithium nickel cobalt aluminum oxide (for example, Li(Ni_{0.8}Co_{0.15}Al_{0.95})O₂), or the like, and considering the obvious improvement effect exhibited by controlling the type and the content ratio of component elements forming the lithium transition metal oxide, the lithium transition metal composite oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.13}Co_{0.15})O₂, or Li(Ni_{0.8}Mn_{0.1}Co_{0.1})O₂, and any one thereof, or a mixture of two or more thereof may be used. Preferably, as the positive electrode active material, the lithium nickel manganese cobalt-based oxide may be used, and most preferably, the lithium nickel manganese cobalt-based oxide represented by Chemical Formula 1 below may be used.

[Chemical Formula 1] Li₁₊ₐ(Niₓ₃Co_{y3}Mn_{z3}M_{w3})O₂

In Chemical Formula 1 above, M is at least one doping element selected from W, Cu, Fe, V, Cr, Ti, Zr, Zn, Al, In, Ta, Y, La, Sr, Ga, Sc, Gd, Sm, Ca, Ce, Nb, Mg, B, and Mo, and 1+a, x3, y3, z3, and w3 are each independently an atomic fraction of an atom, where 0≤a≤0.2, 0.80≤x3<1, 0<y3≤0.2, 0<z3≤0.2, 0≤w3≤0.1, and x3+y3+z3+w3=1.

Meanwhile, as the negative electrode active material, a compound capable of reversibly intercalating and deintercalating lithium may be used, and specific examples may include a carbon-based material such as artificial graphite, natural graphite, and a graphitized carbon fiber, amorphous carbon, etc.; a metal-based compound capable of alloying with lithium including Si, Al, Sn, Pb, Zn, Bi, In, Mg, Ga, Cd, Si alloy, Sn alloy, or Al alloy, etc.; a metal oxide capable of doping or dedoping lithium such as SiO_{β}(0<β<2), SnO₂, vanadium oxide, and lithium vanadium oxide; or a composite containing the metal-based compound and the carbon-based material such as a Si-C composite or a Sn-C composite, and any one thereof or a mixture of two or more thereof may be used. In addition, as the negative electrode active material, a metal lithium thin film may also be used. In addition, for the carbon material, low-crystalline carbon, high-crystalline carbon, and the like may be all used. Representative examples of the low-crystalline carbon include soft carbon and hard carbon, and representative examples of the high-crystalline carbon include non-shaped, plate-shaped, scaly, spherical, or fibrous natural graphite or artificial graphite, kish graphite, pyrolytic carbon, mesophase pitch based carbon fiber, meso-carbon microbeads, and mesophase pitches, and high-temperature calcined carbon such as petroleum or coal tar pitch derived cokes.

The electrode active material may be included in an amount of 80 wt% to 99 wt%, preferably 92 wt% to 99 wt%, and more preferably 94 wt% to 99 wt% on the basis of the total weight of the electrode active material layer. When the amount of the electrode active material falls within the above ranges, excellent energy density, electrode adhesion, and electrical conductivity may be achieved.

The single-walled carbon nanotube structure may form an electrically conductive path in the electrode active material layer, and may thus serve as a conductive material that imparts electrical conductivity.

A carbon nanotube has a graphite sheet in a cylinder shape with a nano-sized diameter, and having a sp2 bonding structure, which exhibits conductor or semiconductor characteristics according to the angle at which the graphite sheet being rolled and the structure. According to the number of combinations constituting the wall, the carbon nanotube may be classified into a single-walled carbon nanotube (SWCNT), a double-walled carbon nanotube (DWCNT), and a multi-walled carbon nanotube (MWCNT). Conventionally, the multi-walled carbon nanotube with a large number of combinations constituting the wall has been used, but in this case, as cycles continue, there was a problem of reduced conductivity thereof, and since the length of carbon nanotube is relatively small, there was a disadvantage in securing conductivity between the active materials.

In addition, conventional electrodes including the carbon nanotubes are generally prepared by dispersing a bundle-type or entangled-type carbon nanotube (single-walled carbon nanotube units or multi-walled carbon nanotube units being bonded or entangled to each other) in a dispersion medium to prepare a conductive material dispersion liquid, and then by using the conductive material dispersion liquid. At this time, the carbon nanotube is completely dispersed in the conventional conductive material dispersion liquid, and is present as a conductive material dispersion liquid in which one strand of carbon nanotube units is dispersed. In the conventional conductive material dispersion liquid, due to excessive dispersion process, the carbon nanotube units are easily severed so as to have a shorter length than an initial length. In addition, even during a rolling process of an electrode, the carbon nanotube units are easily severed, and according to the change in volume of an electrode active material during operation of a battery, the problem of severing the carbon nanotube units occurs additionally. Accordingly, the conductivity of the electrode is reduced, causing a problem of reduced input characteristics, output characteristics, and lifetime characteristics of a battery. Furthermore, the multi-walled carbon nanotube unit has a node growth mechanism (not a smooth linear form, but nodes are present due to defects occurring in a growth process), which causes high structural defects. Therefore, the multi-walled carbon nanotube unit is more easily severed during the dispersion process, and the multi-walled carbon nanotube units, severed short by π-π stacking by carbon of the unit, are likely to aggregate with each other. Accordingly, uniform dispersion and existence in an electrode slurry is even more difficult.

Accordingly, the carbon nanotube structure included in the electrode of the present invention may have a form in which a plurality of single-walled carbon nanotube units with relatively large length and high crystallinity, compared to the multi-walled carbon nanotubes, combine each other side by side, and may thus maintain the length easily without being severed even during the operation of the battery, and therefore, conductivity of the electrode may be maintained. In addition, the conductivity of the electrode may be increased due to high conductivity of the single-walled carbon nanotube units with high crystallinity, thereby significantly improving input characteristics, output characteristics, and lifetime characteristics of the battery. In addition, in the electrode, the carbon nanotube structures are connected to each other to have a network structure, so that excessive volume change in the electrode active material may be suppressed, and at the same time, a strong conductive path may be secured, and deintercalation of the electrode active material may be suppressed to improve adhesive force of the electrode significantly.

In particular, the single-walled carbon nanotube structure may be characterized with an average diameter of 60 nm to 300 nm, preferably 100 nm to 200 nm, and more preferably 130 nm to 170 nm.

The average diameter of the single-walled carbon nanotube structure may vary according to the dispersant to be used and the dispersion method to be applied, and when included in the electrode, according to the average diameter, it may be determined whether a connection path is closely formed in a conductive network, and how well the formed conductive network is maintained.

In particular, when the average diameter is less than 60 nm, the diameter and length of the single-walled carbon nanotube structure is insufficient, so that it may be difficult for the single-walled carbon nanotube structures to be connected to form a conductive network in the electrode, and performance in maintaining the conductive network may also be poor. Accordingly, electrical conductivity may be reduced in the electrode, which may cause a problem of deterioration of cycle characteristics of the battery. In addition, when the average diameter of the single-walled carbon nanotube structure is greater than 300 nm, due to aggregation of the single-walled carbon nanotube structures, the degree to which the conductive network is secured, relative to the amount added to the electrode, may be insignificant, and flexibility of the single-walled carbon nanotube structure may be insufficient, so that an electrical network may not be secured uniformly in the electrode. Accordingly, resistance may not be improved and electrical conductivity may be reduced in the electrode, thereby causing problems in performance and stability of the battery.

Therefore, when the average diameter of the single-walled carbon nanotube structure falls within the range of 60 nm to 300 nm, the single-walled carbon nanotube structure may have an appropriate size, may be evenly dispersed in the electrode, and may secure a sufficient length of the structure, so that the conductive path may be effectively formed in the electrode, improvement of cell resistance may be effective, and electrical conductivity may be sufficiently secured. Accordingly, even with small amounts of the single-walled carbon nanotube structure being included in the electrode, electrical conductivity may be excellent, and the energy density of the electrode may be improved, and thus, capacity characteristics may be improved, and a phenomenon of current concentration may be improved, thereby improving stability of the battery.

The single-walled carbon nanotube structure may be included in an amount of 0.001 wt% to 0.1 wt% on the basis of the total weight of the electrode active material layer. In particular, the single-walled carbon nanotube structure may be included in an amount of 0.001 wt% or greater, 0.003 wt% or greater, 0.005 wt% or greater, 0.008 wt% or greater, 0.01 wt% or greater, and 0.1 wt% or less, 0.08 wt% or less, 0.06 wt% or less, 0.04 wt% or less, 0.02 wt% or less, 0.015 wt% or less, or 0.012 wt% or less. For example, the single-walled carbon nanotube structure may be included in an amount of 0.001 wt% to 0.1 wt%, preferably 0.003 wt% to 0.06 wt%, more preferably 0.005 wt% to 0.03 wt%, even more preferably 0.007 wt% to 0.015 wt%. When the amount falls within the above ranges, it may be possible to prevent viscosities of the conductive material dispersion liquid and the electrode slurry from becoming excessively high during a process of preparing the electrode, and the single-walled carbon nanotube structure may be appropriately dispersed in the electrode active material layer, thereby improving electrical energy density as well as securing sufficient conductivity.

The first dispersant includes a hydrogenated nitrile-based copolymer.

The hydrogenated nitrile-based copolymer serves to make a bundle-type single-walled carbon nanotube dispersed evenly in the conductive material dispersion liquid into the single-walled carbon nanotube structure, without aggregating into a bundled lump, during the dispersion process. In particular, due to poor affinity with an organic solvent, the bundle-type single-walled carbon nanotube has the problem of aggregating rather than being dispersed in a solvent. Accordingly, in the present invention, since the hydrogenated nitrile-based copolymer, which has high affinity with the bundle-type single-walled carbon nanotube, is included together in the electrode active material layer, wetting of the bundle-type single-walled carbon nanotube for the solvent may be strengthened in the dispersion process, and accordingly, the bundled-type single-walled carbon nanotube may be smoothly dispersed into the single-walled carbon nanotube structure having the average diameter according the present invention.

The hydrogenated nitrile-based copolymer may include a copolymer containing a structural unit derived from an α,β-unsaturated nitrile and a structural unit derived from a hydrogenated conjugated diene, or may include a copolymer containing a structural unit derived from an α,β-unsaturated nitrile, a structural unit derived from a conjugated diene, and a structural unit derived from a hydrogenated conjugated diene. In particular, the hydrogenated nitrile-based copolymer may be a hydrogenated nitrile-based copolymer in which the entire structural unit derived from a conjugated diene is hydrogenated, so that the structural unit derived from a conjugated diene is not included, or may also be a partially hydrogenated nitrile-based copolymer in which a part of the structural unit derived from a conjugated diene is hydrogenated, so that the structural unit derived from a hydrogenated conjugated diene is included together with the structural unit derived from a conjugated diene.

The hydrogenated nitrile-based copolymer may be a hydrogenated nitrile butadiene rubber (HNBR), and particularly, a hydrogenated acrylonitrile-butadiene rubber, and more particularly, a partially hydrogenated acrylonitrile-butadiene rubber.

The hydrogenation method of conjugated diene may be performed through a hydrogenation reaction known to the relevant art, for example, a catalytic hydrogenation reaction using a catalytic system such as Rh, Ru, Pd, and Ir, and the amount of catalyst, reaction hydrogen pressure, reaction time, etc. may be controlled to adjust the hydrogenation rate.

The hydrogenated nitrile-based copolymer may be prepared by copolymerizing an α,β-unsaturated nitrile monomer and a conjugated diene monomer, and then hydrogenating a C=C double bond in the copolymer. The polymerization reaction of the monomers and hydrogenation process may be performed according to a general method.

As the α,β-unsaturated nitrile monomer, for example, acrylonitrile, methacrylonitrile, or the like may be used, and one alone thereof, or a mixture of two or more thereof may be used. As the conjugated diene monomer, for example, C4 to C6 conjugated diene monomers such as 1,3-butadiene, isoprene, or 2,3-methyl butadiene may be used, and one alone thereof, or a mixture of two or more thereof may be used.

The structural unit derived from the α,β-unsaturated nitrile may be included in an amount of 20 wt% to 50 wt%, and particularly, 30 wt% to 40 wt% in the hydrogenated nitrile-based copolymer. When the amount falls within the above ranges, affinity of the hydrogenated nitrile-based copolymer with a dispersion medium is in an appropriate level, so that it may be effective in preparing a conductive material dispersion liquid during a process of preparing an electrode.

A weight average molecular weight of the hydrogenated nitrile-based copolymer may be 5,000 g/mol to 200,000 g/mol, preferably 15,000 g/mol to 100,000 g/mol, and more preferably 20,000 g/mol to 70,000 g/mol, and even more preferably 25,000 g/mol to 45,000 g/mol. When the weight average molecular weight falls within the above ranges, the hydrogenated nitrile-based copolymer may easily penetrate between the single-walled carbon nanotube units in the bundle-typed single-walled carbon nanotube, the bundle-type single-walled carbon nanotube may thus be appropriately dispersed into the single-walled carbon nanotube structure, and phase stability of the conductive material dispersion liquid may be improved during the process of preparing the electrode.

The first dispersant may be included in an amount of 0.0001 wt% to 0.05 wt% on the basis of the total weight of the electrode active material layer. For example, the first dispersant may be included in an amount of 0.0001 wt% or greater, 0.0002 wt% or greater, 0.0003 wt% or greater, 0.0004 wt% or greater, 0.0005 wt% or greater, 0.0006 wt% or greater, 0.0007 wt% or greater, 0.0008 wt% or greater, 0.0009 wt% or greater, 0.001 wt% or greater, and 0.05 wt% or less, 0.04 wt% or less, 0.03 wt% or less, 0.02 wt% or less, 0.01 wt% or less, 0.009 wt% or less, 0.008 wt% or less, 0.007 wt% or less, 0.006 wt% or less, 0.005 wt% or less, 0.004 wt% or less, 0.003 wt% or less, 0.002 wt% or less on the basis of the total weight of the electrode active material layer. For example, the first dispersant may be included in an amount of 0.0001 wt% to 0.05 wt%, preferably 0.0003 wt% to 0.02 wt%, 0.0005 wt% to 0.01 wt%, and more preferably 0.0007 wt% to 0.002 wt% on the basis of the total weight of the electrode active material layer. When the first dispersant is included in an amount greater than 0.05 wt% on the basis of the total weight of the electrode active material layer, the viscosity of the conductive material dispersion liquid may be excessively high during a dispersion process, and when included in an amount less than 0.0001 wt%, the bundle-type carbon nanotube may not be effectively dispersed in the conductive material dispersion liquid, causing aggregation of the conductive material. Therefore, when the first dispersant is included in the amount within the above range, the bundle-type carbon nanotube may be effectively dispersed during the dispersion process, so that the average diameter of the single-walled carbon nanotube structure, obtained during the dispersion process, may be appropriately controlled, and shearing force may be effectively transmitted during the dispersion process. In addition, gelation, caused by compatibility between a binder and the hydrogenated nitrile butadiene copolymer, may be prevented, so that output and lifetime characteristics of a battery may be improved.

The second dispersant includes a fluorine-based polymer.

In case of using the hydrogenated nitrile-based copolymer alone as a conductive material dispersant in the electrode active material layer, the viscosity of the conductive material dispersion liquid may be largely changed over time during the dispersion process, and thus, there may be a problem that quality deteriorates during a distribution process. Therefore, in the present invention, since the second dispersant containing a fluorine-based polymer is included together with the first dispersant in the electrode active material layer, non-polar nature of a fluorine element included in the fluorine-based polymer and repulsion effect of unshared electron pair may prevent aggregation of the bundle-type single-walled carbon nanotube and the single-walled carbon nanotube structure during the dispersion process and the process of preparing the electrode.

The fluorine-based polymer may be one or more selected from the group consisting of poly(vinylidene fluoride) (PVDF) and a poly(vinylidene fluoride-co-hexafluoropropylene) (PVdF-HFP) copolymer, and preferably, poly(vinylidene fluoride). In this case, it has the advantage of being added to the conductive material dispersion liquid as a solution, during the process, with excellent affinity with a solvent, compared to another fluorine-based polymer.

The second dispersant may include carboxyl acid. The carboxyl acid may be included in an amount of 0.1 parts by weight to 2.0 parts by weight, preferably 0.5 parts by weight to 1.8 parts by weight, and more preferably 0.7 parts by weight to 1.4 parts by weight on the basis of 100 parts by weight of the second dispersant. When the carboxyl acid is included in the amount within the above ranges, affinity of the second dispersant with a solvent may further increase due to a polar functional group included in the carboxyl acid.

The weight average molecular weight of the second dispersant may be 600,000 g/mol to 1,500,000 g/mol, preferably 700,000 g/mol to 1,300,000 g/mol, and more preferably 850,000 g/mol to 1,150,000 g/mol. When the weight average molecular weight is less than 600,000 g/mol, effect of spatial resistance in the second dispersant decreases significantly, and when greater than 1,500,000 g/mol, the affinity of the second dispersant with the solvent decreases, which is disadvantageous in that it is difficult to be treated as a solution during the dispersion process. Therefore, when the weight average molecular weight falls within the above ranges, aggregation of the conductive material may be suppressed due to the spatial resistance, and also, the affinity of the second dispersant with the solvent is excellent, which may facilitate handling in the process.

The second dispersant may be included in an amount of 0.001 wt% to 0.25 wt% on the basis of the total weight of the electrode active material layer. In particular, the second dispersant may be included in an amount of 0.001 wt% or greater, 0.003 wt% or greater, 0.005 wt% or greater, 0.007 wt% or greater, 0.009 wt% or greater, 0.01 wt% or greater, 0.012 wt% or greater, 0.014 wt% or greater, 0.016 wt% or greater, 0.018 wt% or greater, and 0.25 wt% or less, 0.23 wt% or less, 0.21 wt% or less, 0.2 wt% or less, 0.19 wt% or less, 0.17 wt% or less, 0.15 wt% or less, 0.13 wt% or less, 0.11 wt% or less, 0.1 wt% or less, 0.08 wt% or less, 0.06 wt% or less, 0.04 wt% or less, 0.02 wt% or less, 0.019 wt% or less on the basis of the total weight of the electrode active material layer. For example, the second dispersant may be included in an amount of 0.001 wt% to 0.25 wt%, preferably 0.01 wt% to 0.15 wt%, more preferably 0.012 wt% to 0.05 wt%, and even more preferably 0.016 wt% to 0.02 wt% on the basis of the total weight of the electrode active material layer. When the amount falls within the above ranges, the single-walled carbon nanotube structure as a conductive material may be sufficiently dispersed in the conductive material dispersion liquid and the electrode active material layer, and it may be possible to prevent the viscosities of the conductive material dispersion liquid and the electrode slurry from excessively increasing during the process of preparing the electrode.

The electrode active material layer may further include a binder selectively.

The binder serves to secure binding force between electrode active materials or the electrode active material and an electrode current collector, and binders generally used in the relevant art may be used, and the type is not particularly limited. Specific examples of the binder may include polyvinylidene fluoride (PVDF), vinylidene fluoride-hexafluoropropylene copolymer (PVDF-co-HFP), polyvinyl alcohol, polyacrylonitrile, carboxy methyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one alone or a mixture of two or more thereof may be used.

The binder may be included in an amount of 5 wt% or less, preferably 0.5 wt% to 3 wt%, and more preferably 1 wt% to 2 wt% on the basis of the total weight of the electrode active material layer. When the amount of the binder falls within the above ranges, excellent electrode adhesion may be achieved while increase of electrode resistance is minimized.

An interface resistance between an electrode active material layer and an electrode current collector, measured by a multi-probe resistance (MP resistance) measurement method, is 0.43 Ω·cm² or less. The interface resistance between the electrode active material layer and the electrode current collector, measured by the multi-probe resistance (MP resistance) measurement method, may be adjusted by the types and amounts of the first dispersant and the second dispersant, the amount and average diameter of the single-walled carbon nanotubes, etc. The present inventors discovered that, when the electrode includes the single-walled carbon nanotube structure having an average diameter in a particular range, dispersion of the conductive material is improved, but in case that the interface resistance of the electrode active material layer and the electrode current collector is out of the above range, a conductive path is not evenly formed on the whole in the electrode and thus the resistance of a battery is not sufficiently improved.

In particular, the interface resistance between the electrode active material layer and the electrode current collector, measured by the multi-probe resistance (MP resistance) measurement method, may be 0.43 Ω·cm² or less, 0.4 Ω·cm² or less, 0.38 Ω·cm² or less, 0.35 Ω·cm² or less, 0.33 Ω·cm² or less, 0.32 Ω·cm² or less, 0.3 Ω·cm² or less, 0.28 Ω·cm² or less, 0.27 Ω·cm² or less, 0.25 Ω·cm² or less, 0.24 Ω·cm² or less, 0.23 Ω·cm² or less, 0.2 Ω·cm² or less, 0.18 Ω·cm² or less, 0.15 Ω·cm² or less, 0.13 Ω·cm² or less, 0.1 Ω·cm² or less, 0.09 Ω·cm² or less, 0.08 Ω·cm² or less, and 0.01 Ω·cm² or greater, 0.05 Ω·cm² or greater, 0.07 Ω·cm² or greater, 0.1 Ω·cm² or greater, 0.13 Ω·cm² or greater, 0.15 Ω·cm² or greater, 0.17 Ω·cm² or greater, 0.2 Ω·cm² or greater, 0.23 Ω·cm² or greater, 0.25 Ω·cm² or greater, 0.27 Ω·cm² or greater, 0.3 Ω·cm² or greater, 0.32 Ω·cm² or greater. For example, the interface resistance between the electrode active material layer and the electrode current collector, measured by the multi-probe resistance (MP resistance) measurement method, may be 0.43 Ω·cm² or less, preferably 0.01 Ω·cm² to 0.43 Ω·cm², more preferably 0.07 Ω·cm² to 0.4 Ω·cm², and even more preferably 0.1 Ω·cm² to 0.38 Ω·cm², even more preferably 0.2 Ω·cm² to 0.38 Ω·cm², and even more preferably 0.3 Ω·cm² to 0.38Ω·cm². When the interface resistance falls within the above ranges, initial resistance characteristics of a battery may be improved, and therefore, lifetime characteristics and output characteristics of the battery may be excellent.

### Preparation Method of Electrode

According to another embodiment of the present invention, a preparation method of an electrode includes preparing a conductive material dispersion liquid containing a bundle-type single-walled carbon nanotube, a first dispersant, a second dispersant, and a dispersion medium (S1); and applying an electrode slurry containing the conductive material dispersion liquid and an electrode active material onto a current collector to prepare an electrode including an electrode active material layer (S2), the first dispersant includes a hydrogenated nitrile-based copolymer, the second dispersant includes a fluorine-based polymer, the electrode active material layer includes a single-walled carbon nanotube structure, the first dispersant, the second dispersant, and the electrode active material, and the single-walled carbon nanotube structure has an average diameter of 60 nm to 300 nm.

### (1) S1: Preparing Conductive Material Dispersion Liquid

A conductive material dispersion liquid including a bundle-type single-walled carbon nanotube, a first dispersant, a second dispersant, and a dispersion medium is prepared. In S1 above, the bundle-type single-walled carbon nanotube may be dispersed into a single-walled carbon nanotube structure having an appropriate average diameter, and the single-walled carbon nanotube structure may be distributed evenly in the conductive material dispersion liquid.

S1 above may include preparing a first dispersion liquid containing a bundle-type single-walled carbon nanotube, a first dispersant, and a dispersion medium (S1-1); and preparing a conductive material dispersion liquid in which a second dispersant is mixed in the first dispersion liquid (S1-2), and S1 above may include preparing a first dispersion liquid containing a bundle-type single-walled carbon nanotube, a first dispersant, and a dispersion medium (S1-1); preparing a conductive material dispersion liquid in which a second dispersant is mixed in the first dispersion liquid (S1-2); and passing the conductive material dispersion liquid through a high-pressure homogenizer (S1-3). When S1 above is performed by being subdivided into S1-1, S1-2, and/or S1-3 above, it may be very easy to obtain a single-walled carbon nanotube structure having an appropriate average diameter, and the single-walled carbon nanotube structure may be more evenly distributed in the conductive material dispersion liquid, and therefore, initial resistance characteristics, output characteristics, and lifetime characteristics of an electrode and a battery, applied with the conductive material dispersion liquid prepared through the above processes, may be improved.

First, the preparing of the first dispersion liquid containing the bundle-type single-walled carbon nanotube, the first dispersant, and the dispersion medium (S1-1) may be performed.

According to S1-1 above, by first preparing the first dispersion liquid containing only the first dispersant, the bundle-type single-walled carbon nanotube, and the dispersion medium before the second dispersant is added to the conductive material dispersion liquid, wetting characteristics of the bundle-type single-walled carbon nanotube for the dispersion medium may be improved by the first dispersant, and accordingly, the bundle-type single-walled carbon nanotube may have high affinity with the dispersion medium, thereby further facilitating the dispersion of the bundle-type single-walled carbon nanotube in S1-2 to be described later.

The preparing of the first dispersion liquid (S1-1) may be performed by a wet process of mixing each component evenly.

The preparing of the first dispersion liquid (S1-1) may include agitating at 500 rpm to 3000 rpm, preferably 1200 rpm to 2800 rpm, and more preferably 2000 rpm to 2600 rpm. In addition, the preparing of the first dispersion liquid (S1-1) may include agitating for 15 min to 60 min, preferably 20 min to 50 min, and more preferably 20 min to 40 min. When the agitating condition falls within the above ranges, the bundle-type single-walled carbon nanotube and the first dispersant may be sufficiently mixed, and the wetting characteristics for the dispersion medium may thus be improved.

In particular, the preparing of the first dispersion liquid (S1-1) may be performed by a general mixing method, for example, using a mixing instrument such as an inline mixer, a homogenizer, a beads mill, a ball mill, a basket mill, an attrition mill, a universal agitator, a clear mixer, a spike mill, or a TK mixer, and preferably, using the inline mixer.

At this time, the order of mixing each component is not particularly limited. That is, the first dispersion liquid may be prepared by a method of adding the bundle-type single-walled carbon nanotube to the dispersion medium, and then adding and mixing the first dispersant thereto, may also be prepared by a method of first adding the first dispersant to the dispersion medium and then mixing the bundle-type single-walled carbon nanotube structure, and may also be prepared by a method of adding the first dispersant and the bundle-type single-walled carbon nanotube together to the dispersion medium and then mixing.

The first dispersant includes a hydrogenated nitrile-based copolymer. Since the first dispersant is the same as previously described, and detailed description thereof will be omitted.

The dispersion medium may serve as a medium for dispersing the bundle-type single-walled carbon nanotube into the single-walled carbon nanotube structure.

The dispersion medium may be an organic solvent, which includes, for example, an amide-based organic solvent such as dimethyl formamide (DMF), diethyl formamide, dimethyl acetamide (DMAc), and N-methyl pyrrolidone (NMP); alcohols including methanol, ethanol, 1-propanol, 2-propanol(isopropyl alcohol), 1-butanol(n-butanol), 2-methyl-1-propanol(isobutanol), 2-butanol(sec-butanol), 1-methyl-2-propanol(tert-butanol), pentanol, hexanol, heptanol, or octanol; glycols including ethylene glycol, diethylene glycol, triethylene glycol, propylene glycol, 1,3-propanediol, 1,3-butanediol, 1,5-pentanediol, or hexyleneglycol; polyhydric alcohols including glycerin, trimethylolpropane, pentaerythritol, or sorbitol; glycol ethers including ethylene glycol mono methyl ether, diethylene glycol mono methyl ether, tri ethylene glycol mono methyl ether, tetra ethylene glycol mono methyl ether, ethylene glycol mono ethyl ether, diethylene glycol mono ethyl ether, tri ethylene glycol mono ethyl ether, tetra ethylene glycol mono ethyl ether, ethylene glycol mono butyl ether, diethylene glycol mono butyl ether, tri ethylene glycol mono butyl ether, or tetra ethylene glycol mono butyl ether, etc.; ketones including acetone, methyl ethyl ketone, methyl propyl ketone, or cyclopentanone; and esters including ethyl acetate, γ-butyrolactone, and ε-propiolactone, and any one thereof, or a mixture of two or more thereof may be used. Preferably, the solvent may be an amide-based organic solvent including dimethylformamide (DMF), diethyl formamide, dimethyl acetamide (DMAc), and N-methylpyrrolidone (NMP), and more preferably, the dispersion medium may be N-methylpyrrolidone.

When the first dispersion liquid is prepared through S1-1 above, the mixing of the second dispersant in the first dispersion liquid to prepare the conductive material dispersion liquid (S1-2) may be performed.

In a preparation method of an electrode according to the present invention, since the second dispersant containing a fluorine-based polymer is further mixed in the first dispersion liquid prepared through S1-1, the distance between single-walled carbon nanotube units in the bundle-type single-walled carbon nanotube, having improved wetting characteristics and affinity to the dispersion medium due to the first dispersant, may be increased more easily.

The mixing of the second dispersant in the first dispersion liquid may be performed by a wet process of mixing each component evenly.

The mixing of the second dispersant in the first dispersion liquid may include agitating at 500 rpm to 3000 rpm, preferably 1200 rpm to 2800 rpm, and more preferably 2000 rpm to 2600 rpm. In addition, the mixing of the second dispersant in the first dispersion liquid may include agitating for 15 min to 60 min, preferably 20 min to 50 min, and more preferably 20 min to 40 min. When the agitating condition falls within the above ranges, the distance between the single-walled carbon nanotube units in the bundle-type single-walled carbon nanotube may be increased more easily by the second dispersant, the viscosity of the conductive material dispersion liquid may not be excessively high, and during S1-3, the conductive material dispersion liquid may have a particle size smaller than the diameter of a microchannel of a high-pressure homogenizer and may thus pass through the microchannel smoothly.

In particular, the mixing of the second dispersant in the first dispersion liquid may be performed by a general mixing method, for example, using a mixing instrument such as an inline mixer, a homogenizer, a beads mill, a ball mill, a basket mill, an attrition mill, a universal agitator, a clear mixer, a spike mill, or a TK mixer, and preferably, using the inline mixer.

The second dispersant may include a fluorine-based polymer. Since the second dispersant is the same as previously described, detailed description thereof will be omitted.

Next, once the conductive material dispersion liquid is prepared through S1-2 above, the passing of the conductive material dispersion liquid through a high-pressure homogenizer (S1-3) may be performed. In S2 above, the conductive material dispersion liquid may be the conductive material dispersion liquid which has gone through S1-3 above.

As passing through the high-pressure homogenizer, the conductive material dispersion liquid may be subjected to shearing force, and a bundle of the bundle-type single-walled carbon nanotube may be further ground, and the conductive material dispersion liquid including a single-walled carbon nanotube structure having a smaller average diameter may be obtained.

At this time, the high-pressure homogenizer may include an inlet part, an outlet part, and a microchannel which connects between the inlet part and the outlet part.

In particular, the passing of the conductive material dispersion liquid through the high-pressure homogenizer may include introducing the conductive material dispersion liquid into the inlet part of the high-pressure homogenizer and passing it through the microchannel. Accordingly, as passing through the microchannel, the conductive material dispersion liquid may be subjected to shearing force and a bundle of the bundle-type single-walled carbon nanotube structure may be ground, and the conductive material dispersion liquid may include a single-walled carbon nanotube structure having a smaller average diameter.

The microchannel may have a diameter of 50 µm to 800 µm, preferably of 100 µm to 700 µm, and more preferably of 200 µm to 600 µm. In addition, the conductive material dispersion liquid may be applied with a pressure of 100 bar to 2500 bar, preferably 500 bar to 2000 bar, and more preferably 1000 bar to 1700 bar to be introduced into the inlet part of the high-pressure homogenizer, and may pass through the microchannel.

In S1-3 above, the conductive material dispersion liquid, which has passed through the high-pressure homogenizer, may include a single-walled carbon nanotube structure, the first dispersant, and the second dispersant.

### (2) S2: Preparing Electrode

Applying an electrode slurry including the conductive material dispersion liquid, prepared through S1 above, and an electrode active material onto an electrode current collector to prepare an electrode including an electrode active material layer (S2) is performed.

In particular, the electrode may be prepared by applying the electrode slurry including the conductive material dispersion liquid and the electrode active material onto the current collector and drying, and then performing rolling to form the electrode active material layer. Alternatively, the electrode may be formed through a method of applying the electrode slurry onto a separate support, and then laminating a film separated from the support onto the current collector.

The applying may be performed continuously or intermittently using various application methods well known to the relevant art, for example, slot die coating, slide coating, curtain coating, etc.

The drying serves to dry a solvent included in the applied electrode slurry to retain a solid content in the slurry. The drying may be performed at 40 °C to 180 °C, preferably 50 °C to 140 °C, more preferably 60 °C to 120 °C, and even more preferably 70 °C to 110 °C.

The performing rolling serves to compress the electrode into a desired thickness in order to increase energy density of the electrode and to increase adhesion between the current collector and the electrode active material. The rolling may be performed by a roll-press method of rolling according to the thickness of a positive electrode by adjusting the spacing of upper and lower rolls, but is not limited thereto.

The electrode slurry includes a conductive material dispersion liquid and an electrode active material. In particular, the electrode slurry may include a conductive material dispersion liquid, an electrode active material, a binder, and a solvent.

Since the conductive material dispersion liquid, the electrode active material, and the binder are the same as previously described, detailed descriptions thereof will be omitted.

The solvent may be included in the electrode slurry for adjusting the viscosity, etc.

At this time, the solvent may be water, an organic solvent, or a mixture thereof. The organic solvent may be, for example, an amide-based polar organic solvent including dimethyl formamide (DMF), diethyl formamide, dimethyl acetamide (DMAc), N-methyl pyrrolidone (NMP), etc.; alcohols including methanol, ethanol, 1-propanol, 2-propanol(isopropyl alcohol), 1-butanol(n-butanol), 2-methyl-1-propanol(isobutanol), 2-butanol(sec-butanol), 1-methyl-2-propanol(tert-butanol), pentanol, hexanol, heptanol, or octanol; glycols including ethylene glycol, diethylene glycol, triethylene glycol, propylene glycol, 1,3-propanediol, 1,3-butanediol, 1,5-pentanediol, or hexyleneglycol; polyhydric alcohols including glycerin, trimethylolpropane, pentaerythritol, or sorbitol; glycol ethers including ethylene glycol mono methyl ether, diethylene glycol monomethyl ether, tri ethylene glycol mono methyl ether, tetra ethylene glycol mono methyl ether, ethylene glycol mono ethyl ether, diethylene glycol mono ethyl ether, tri ethylene glycol mono ethyl ether, tetra ethylene glycol mono ethyl ether, ethylene glycol mono butyl ether, diethylene glycol mono butyl ether, tri ethylene glycol mono butyl ether, or tetra ethylene glycol mono butyl ether, etc.; ketones including acetone, methyl ethyl ketone, methyl propyl ketone, or cyclopentanone; and esters including ethyl acetate, γ-butyrolactone, and ε-propiolactone, and any one thereof, or a mixture of two or more thereof may be used, but an embodiment is not limited thereto.

The solvent may be included in an amount such that the solid content becomes 60 to 85 wt%, and preferably 65 to 80 wt% in the electrode slurry. When the amount falls within the above ranges, binder migration may be suppressed, so that the electrode adhesion may be improved, and the temperature for drying may be lowered, so that the coating quality may be improved and the coating speed may be increased, thereby improving the productivity.

Since the current collector is the same as previously described, detailed description thereof will be omitted.

The electrode prepared as above includes an electrode active material layer, and particularly, includes a current collector and an electrode active material layer positioned on one side or both sides of the current collector.

The electrode active material layer may include a single-walled carbon nanotube structure, a first dispersant, a second dispersant, and an electrode active material, and additionally, may further include a binder.

The average bundle diameter of the single-walled carbon nanotube structure, included in the electrode active material layer prepared as above, is 60 nm to 300 nm, preferably 100 nm to 200 nm, and more preferably 130 nm to 170 nm.

In the preparation method of an electrode according to the present invention, the bundle-type single-walled carbon nanotube may be evenly dispersed into the single-walled carbon nanotube structure more effectively through a series of processes of first mixing and preparing the first dispersion liquid to improve wetting characteristics of the bundle-type single-walled carbon nanotube for a dispersion medium by a hydrogenated nitrile-based copolymer, then increasing the distance between the single-walled carbon nanotube units in the bundle-typed single-walled carbon nanotube by the second dispersant containing a fluorine-based polymer, and passing the prepared second dispersion liquid through a high-pressure homogenizer to prepare a conductive material dispersion liquid. That is, in the preparation method of the electrode according to the present invention, by appropriately controlling the conditions such as the combination and properties of the bundle-type single-walled carbon nanotube, the first dispersant, and the second dispersant, and the mixing order of the dispersant, the obtained single-walled carbon nanotube structure may satisfy an appropriate average diameter range, so that the single-walled carbon nanotube structure may be evenly dispersed in the conductive material dispersion liquid, and also in the electrode prepared using the conductive material dispersion liquid, the single-walled carbon nanotube structure may be evenly dispersed to thereby secure sufficient electrical conductive path.

In particular, when the average diameter of the single-walled carbon nanotube structure is smaller than 60 nm, the diameter and length of the single-walled carbon nanotube structure may be insufficient to secure sufficient electrically conductive path in the electrode, and therefore, there may be a problem of reduced electrical conductivity. When the average diameter of the single-walled carbon nanotube structure is larger than 300 nm, excessive aggregation of the single-walled carbon nanotube structures may cause deterioration of dispersibility, and accordingly, the resistance may not be improved, and electrical conductivity may be reduced in the electrode, causing problems in performance and stability of a battery.

Therefore, when the average diameter of the single-walled carbon nanotube structure falls within the range of 60 nm to 300 nm, the single-walled carbon nanotube structure may have an appropriate size to form a sufficient electrical conductive path in the electrode, and may also be evenly dispersed in the electrode without aggregation of the single-walled carbon nanotube structure, so that improvement of battery resistance may be effective, and electrical conductivity may be sufficiently secured. Accordingly, even with a relatively small amount of the single-walled carbon nanotube structure being included in the electrode, electrical conductivity may be excellent, improving the energy density of the electrode, so that capacity characteristics may be improved, and a phenomenon of current concentration may be improved, thereby improving stability of the battery.

In addition, in the electrode prepared as above, the interface resistance between the electrode active material layer and the electrode current collector, measured by a multi-probe resistance (MP resistance) measurement method, is 0.43 Ω·cm² or less. The interface resistance between the electrode active material layer and the electrode current collector, measured by the multi-probe resistance (MP resistance) measurement method, may be adjusted by the types and amounts of the first dispersant and the second dispersant, the amount and average diameter of the single-walled carbon nanotubes, etc. The present inventors discovered that, although dispersion of a conductive material is improved when the electrode includes a single-walled carbon nanotube structure with an average diameter in a particular range, in case that the interface resistance between the electrode active material layer and the electrode current collector is out of the above range, a conductive path is not evenly formed on the whole in the electrode, so that the resistance of a battery may not be sufficiently improved.

In particular, the interface resistance between the electrode active material layer and the electrode current collector, measured by the multi-probe resistance (MP resistance) measurement method, may be 0.43 Ω·cm² or less, 0.4 Ω·cm² or less, 0.38 Ω·cm² or less, 0.35 Ω·cm² or less, 0.33 Ω·cm² or less, 0.32 Ω·cm² or less, 0.3 Ω·cm² or less, 0.28 Ω·cm² or less, 0.27 Ω·cm² or less, 0.25 Ω·cm² or less, 0.24 Ω·cm² or less, 0.23 Ω·cm² or less, 0.2 Ω·cm² or less, 0.18 Ω·cm² or less, 0.15 Ω·cm² or less, 0.13 Ω·cm² or less, 0.1 Ω·cm² or less, 0.09 Ω·cm² or less, 0.08 Ω·cm² or less, 0.01 Ω·cm² or greater, 0.05 Ω·cm² or greater, 0.07 Ω·cm² or greater, 0.1 Ω·cm² or greater, 0.13 Ω·cm² or greater, 0.15 Ω·cm² or greater, 0.17 Ω·cm² or greater, 0.2 Ω·cm² or greater, 0.23 Ω·cm² or greater, 0.25 Ω·cm² or greater, 0.27 Ω·cm² or greater, 0.3 Ω·cm² or greater, 0.32 Ω·cm² or greater. For example, the interface resistance between the electrode active material layer and the electrode current collector, measured by the multi-probe resistance (MP resistance) measurement method, may be 0.43 Ω·cm² or less, preferably 0.01 Ω·cm² to 0.43 Ω·cm², more preferably 0.07 Ω·cm² to 0.4 Ω·cm², and even more preferably 0.1 Ω·cm² to 0.38 Ω·cm², even more preferably 0.2 Ω·cm² to 0.38 Ω·cm², and even more preferably 0.3 Ω·cm² to 0.38 Ω·cm². When the interface resistance falls within the above ranges, the initial resistance characteristics of a battery may be improved, and lifetime characteristics and output characteristics of the battery may be excellent.

In addition, since the single-walled carbon nanotube structure is the same as previously described for the electrode, detailed description thereof will be omitted.

Since the first dispersant, the second dispersant, and the electrode active material are the same as previously described for the electrode, detailed descriptions thereof will be omitted.

### Lithium Secondary Battery

A lithium secondary battery according to another embodiment of the present invention includes a positive electrode; a negative electrode; an electrolyte; and a separator, and at least one of the positive electrode or the negative electrode is the electrode according to the above-described embodiment. Preferably, the positive electrode may be the electrode according to the above-described embodiment.

Since the electrode according to the present invention is previously described, detailed description thereof will be omitted.

The separator is disposed between the positive electrode and the negative electrode, separates the negative electrode and the positive electrode, and provides a movement path of lithium ions, any separator generally used for a lithium secondary battery may be used without particular limitation, and particularly, a separator having low resistance to ion movement in an electrolyte and having excellent electrolyte solution moisture-absorbing ability is preferred. In particular, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high melting point, a polyethylene terephthalate fiber, etc. may also be used. Furthermore, a coated separator including a ceramic component or a polymer material may also be used in order to secure heat resistance or mechanical strength, and may be selectively used in a single-layer or multi-layer structure.

The electrolyte used in the present invention may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of a secondary battery, and the type is not limited thereto.

In particular, the electrolyte may include an organic solvent and a lithium salt.

Any organic solvent may be used as the organic solvent, without particular limitation, as long as it may serve as a medium through which ions involved in an electrochemical reaction of the battery may move. In particular, as the organic solvent, an ester-based solvent including methyl acetate, ethyl acetate, γ-butyrolactone, ε-caprolactone, etc.; an ether-based solvent including dibutyl ether, tetrahydrofuran, etc.; a ketone-based solvent such as cyclohexanone; an aromatic hydrocarbon-based solvent including benzene, fluorobenzene, etc.; a carbonate-based solvent including dimethyl carbonate (DMC), diethyl carbonate (DEC), ethylmethylcarbonate (EMC), ethylene carbonate (EC), propylene carbonate (PC), etc.; an alcohol-based solvent including ethyl alcohol, isopropyl alcohol, etc.; nitriles including R-CN (where R is a linear, branched, or cyclic C2 to C20 hydrocarbon group, and may include a double-bond aromatic ring or an ether bond); amides such as dimethylformamide; dioxolanes such as 1,3-dioxolane; or sulfolanes may be used. Among these, a carbonate-based solvent is preferred, and a mixture of a cyclic carbonate (for example, ethylene carbonate, propylene carbonate, or the like) having high ionic conductivity and high dielectric constant capable of increasing charging and discharging performance of a battery, and a low-viscosity linear carbonate-based compound (for example, ethylmethyl carbonate, dimethyl carbonate, diethyl carbonate, or the like) is more preferred. In this case, when the cyclic carbonate and the linear carbonate may be mixed in a volume ratio of about 1:1 to about 1:9, performance of an electrolyte solution may be excellent.

Any compound capable of providing lithium ions that are used in a lithium secondary battery may be used for the lithium salt without particular limitation. In particular, negative ions of the lithium salt may be at least one selected from the group consisting of F⁻, Cl⁻, Br⁻, I⁻, O₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂ or the like may be used as the lithium salt. The lithium salt may be used in a concentration range of 0.1 to 4.0 M. When the concentration of lithium salt falls within the above ranges, the electrolyte may have appropriate conductivity and viscosity, and therefore, excellent performance of the electrolyte may be exhibited, and lithium ions may move effectively.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, or the like may also be further included in the electrolyte in addition to the electrolyte components. At this time, the additive may be included in an amount of 0.1 to 5 wt% on the basis of the total weight of the electrolyte.

The lithium secondary battery according to the present invention is useful in the field of mobile devices such as mobile phones, laptop computers, and digital cameras, and in the field of electric vehicles such as hybrid electric vehicles (HEV) .

Therefore, according to another embodiment of the present invention, a battery module including the lithium secondary battery as a unit cell and a battery pack including the battery module are provided.

The battery module or battery pack may be used as a power source for any one or more medium and large-sized devices among a power tool; an electric vehicle including an electric vehicle (EV), a hybrid electric vehicle, and a plug-in hybrid electric vehicle (PHEV); or a system for power storage.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be preferably used as a unit battery in a medium and large-sized battery module including a plurality of battery cells.

Examples of the medium and large-sized device may include an electric vehicle, a hybrid electric vehicle, a plug-in hybrid electric vehicle, a system for power storage, and the like, but not limited thereto.

Hereinafter, the present invention is described in more detail through particular examples.

### Example 1

### <Preparation of Conductive Material Dispersion Liquid>

A bundle-type single-walled carbon nanotube having an average diameter of 1 µm as a raw material, and a hydrogenated nitrile butadiene rubber (first dispersant) having a weight average molecular weight of about 40,000 g/mol were added to an N-methyl pyrrolidone dispersion medium in a weight ratio of 1.2:0.6, and agitated at 2400 rpm for 30 minutes using an inline mixer (IM002, K&S Corporation) to prepare a first dispersion liquid (solid content: 1.8%).

Polyvinylidene fluoride (PVDF) (second dispersant) having a weight average molecular weight of about 1000,000 g/mol and N-methylpyrrolidone were further added to the first dispersion liquid, and agitated at 2400 rpm for 30 minutes using an inline mixer (IM002, K&S Corporation) to prepare a conductive material dispersion liquid. At this time, in the conductive material dispersion liquid, a weight ratio of the bundle-type single-walled carbon nanotube, the hydrogenated nitrile butadiene rubber, and polyvinylidene fluoride was 1.2:0.6:1.8 (solid content: 3.6%).

The conductive material dispersion liquid was introduced into an inlet part of a high-pressure homogenizer (PICOMAX) with a pressure of 1500 bar, and the second dispersion liquid was passed through a microchannel and circulated for 30 times.

The single-walled carbon nanotube structure was included in an amount of 1.2 wt%, the hydrogenated nitrile butadiene rubber was included in an amount of 0.6 wt%, and polyvinylidene fluoride (PVDF) was included in an amount of 1.8 wt% on the basis of the total weight of the conductive material dispersion liquid which has passed through the high-pressure homogenizer.

### <Preparation of Positive Electrode>

Li(Ni_{0.8}Mn_{0.1}Co_{0.1})O₂, and polyvinylidene fluoride (PVDF) as a binder were additionally added to the conductive material dispersion liquid prepared as above, and mixed to prepare a positive electrode slurry.

Li(Ni_{0.8}Mn_{0.1}Co_{0.1})O₂ as a positive electrode active material, the conductive material dispersion liquid prepared as above as a conductive material, polyvinylidene fluoride (PVDF) as a binder were mixed in a weight ratio of 97.5:0.7:1.8 to prepare a positive electrode slurry. The slurry was applied onto an aluminum (Al) thin film current collector having a thickness of 15 µm, and dried and then pressed to prepare a positive electrode including a positive electrode active material layer having a thickness of 70 µm.

### Example 2

A positive electrode was prepared in the same method as that of Example 1, except that a hydrogenated nitrile butadiene rubber (first dispersant) having a weight average molecular weight of about 10,000 g/mol was used when a first dispersion liquid was prepared.

### Example 3

A positive electrode was prepared in the same method as that of Example 1, except that a bundle-type single walled carbon nanotube and a hydrogenated nitrile butadiene rubber (first dispersant) were added in a weight ratio of 1.2:0.12 to prepare a first dispersion liquid.

### Comparative Example 1

### <Preparation of Conductive Material Dispersion Liquid>

A bundle-type single-walled carbon nanotube having an average diameter of 1 µm as a raw material, and polyvinylidene fluoride (second dispersant) were added to an N-methyl pyrrolidone dispersion medium in a weight ratio of 1.2:2.4, and agitated at 2400 rpm for 30 minutes using an inline mixer (IM002 K&S corporation) to prepare a conductive material dispersion liquid (solid content: 3.6%). At this time, the weight average molecular weight of the polyvinylidene fluoride was about 1,000,000 g/mol.

The conductive material dispersion liquid was introduced into an inlet part of a high-pressure homogenizer (PICOMAX) with a pressure of 1500 bar, the dispersion liquid was passed through a microchannel and circulated for 30 times. The single-walled carbon nanotube structure was included in an amount of 1.2 wt%, and the polyvinylidene fluoride (PVDF) was included in an amount of 2.4 wt% on the basis of the total weight of the conductive material dispersion liquid which has passed through the high-pressure homogenizer.

### <Preparation of Positive Electrode>

A positive electrode was prepared in the same method as that of Example 1 above, except that the conductive material dispersion liquid prepared as above was used.

### Comparative Example 2

### <Preparation of Conductive Material Dispersion Liquid>

A bundle-type single-walled carbon nanotube having an average diameter of 1 µm as a raw material, and polyvinylidene fluoride (second dispersant) were added to an N-methyl pyrrolidone dispersion medium in a weight ratio of 1.2:2.4, and agitated at 2400 rpm for 30 minutes using an inline mixer (IM002 K&S corporation) to prepare a conductive material dispersion liquid (solid content: 3.6%). At this time, the weight average molecular weight of the polyvinylidene fluoride was about 1,000,000 g/mol.

The conductive material dispersion liquid was introduced into an inlet part of a high-pressure homogenizer (PICOMAX) with a pressure of 2000 bar, and the dispersion liquid was passed through a microchannel and circulated for 50 times. The single-walled carbon nanotube was included in an amount of 1.2 wt%, and polyvinylidene fluoride (PVDF) was included in an amount of 2.4 wt% on the basis of the total weight of the conductive material dispersion liquid which has passed through the high-pressure homogenizer.

### <Preparation of Positive Electrode>

A positive electrode was prepared in the same method as that of Example 1 above, except that the conductive material dispersion liquid prepared as above was used.

### Comparative Example 3

### <Preparation of Conductive Material Dispersion Liquid>

A bundle-type single-walled carbon nanotube having an average diameter of 1 µm as a raw material, and a hydrogenated nitrile butadiene rubber (first dispersant) having a weight average molecular weight of about 40,000 g/mol were added to an N-methyl pyrrolidone dispersion medium in a weight ratio of 1.2:2.4, and agitated at 1500 rpm for 30 minutes using an inline mixer (IM002 K&S corporation) to prepare a conductive material dispersion liquid (solid content: 3.6%).

### <Preparation of Positive Electrode>

A positive electrode was prepared in the same method as that of Example 1 above, except that the conductive material dispersion liquid prepared as above was used.

### Comparative Example 4

### <Preparation of Conductive Material Dispersion Liquid>

A bundle-type single-walled carbon nanotube having an average diameter of 1 µm as a raw material, and a hydrogenated nitrile butadiene rubber (first dispersant) having a weight average molecular weight of about 40,000 g/mol were added to an N-methyl pyrrolidone dispersion medium in a weight ratio of 1:1, and agitated at 2400 rpm for 30 minutes using an inline mixer (IM002 K&S corporation) to prepare a first dispersion liquid (solid content: 1.8%).

Polyvinylidene fluoride (PVDF) (second dispersant) having a weight average molecular weight of about 1,000,000 g/mol and N-methylpyrrolidone were further added to the first dispersion liquid, and agitated at 2400 rpm for 30 minutes using an inline mixer (IM002, K&S Corporation) to prepare a conductive material dispersion liquid. At this time, in the conductive material dispersion liquid, a weight ratio of the single-walled carbon nanotube, the hydrogenated nitrile butadiene rubber, and polyvinylidene fluoride was 1.2:0.6:1.8 (solid content: 3.6%).

The conductive material dispersion liquid was introduced into an inlet part of a high-pressure homogenizer (PICOMAX) with a pressure of 2000 bar, and the conductive material dispersion liquid was passed through a microchannel and circulated for 50 times.

The single-walled carbon nanotube structure was included in an amount of 1.2 wt%, the hydrogenated nitrile butadiene rubber was included in an amount of 1.2 wt%, and polyvinylidene fluoride (PVDF) was included in an amount of 1.8 wt% on the basis of the total weight of the conductive material dispersion liquid which has passed through the high-pressure homogenizer.

### <Preparation of Positive Electrode>

A positive electrode was prepared in the same method as that of Example 1 above, except that the conductive material dispersion liquid prepared as above was used.

### Comparative Example 5

### <Preparation of Conductive Material Dispersion Liquid>

A commercialized single-walled carbon nanotube predispersion liquid (PD0521, OCSiAl) was used to prepare a conductive material dispersion liquid. A single-walled carbon nanotube structure was included in an amount of 1.0 wt%, and polyvinylidene fluoride (PVDF) (second dispersant) was included in an amount of 2.0 wt% on the basis of the total weight of the conductive material dispersion liquid.

### <Preparation of Positive Electrode>

A positive electrode was prepared in the same method as that of Example 1 above, except that the conductive material dispersion liquid prepared as above was used.

The amounts of components constituting the positive electrode prepared according to each of Examples 1 to 3 and Comparative Examples 1 to 5, on the basis of the total weight of the positive electrode active material layer, were listed in Table 1 below.

**[Table 1]**

| | Positive electrode active material | Binder | Single-walled carbon nanotube structure | First dispersant | Second dispersant |
|---|---|---|---|---|---|
| Example 1 | 97.5 wt% | 1.8 wt% | 0.01 wt% | 0.005 wt% | 0.015 wt% |
| Example 2 | 97.5 wt% | 1.8 wt% | 0.01 wt% | 0.005 wt% | 0.015 wt% |
| Example 3 | 97.5 wt% | 1.8 wt% | 0.01 wt% | 0.001 wt% | 0.019 wt% |
| Comparative Example 1 | 97.5 wt% | 1.8 wt% | 0.01 wt% | - | 0.02 wt% |
| Comparative Example 2 | 97.5 wt% | 1.8 wt% | 0.01 wt% | - | 0.02 wt% |
| Comparative Example 3 | Due to increase in viscosity, it is impossible to use a high-pressure homogenizer, and impossible to form a sample. | | | | |
| Comparative Example 4 | 97.5 wt% | 1.8 wt% | 0.01 wt% | 0.01 wt% | 0.01 wt% |
| Comparative Example 5 | 97.5 wt% | 1.8 wt% | 0.01 wt% | - | 0.01 wt% |

### Experimental Example 1: Measurement of Average Diameter of Single-Walled Carbon Nanotubes and Interface Resistance between Electrode Active Material Layer and Electrode Current Collector

### (1) Measurement of Average Diameter of Single-Walled Carbon Nanotubes

The average diameter of single-walled carbon nanotube structure included in the electrode, prepared according to each of Examples 1 to 3 and Comparative Examples 1 to 5, was measured from an image observed using a scanning electron microscope (SEM, Hitachi). In particular, the electrode, prepared according to each of Examples 1 to 3 and Comparative Examples 1 to 5, was observed through a scanning electron microscope, arithmetic average values of the diameters of top 100 single-walled carbon nanotube structures and bottom 100 single-walled carbon nanotube structures, in the order of diameter, were measured as the average diameter of the single-walled carbon nanotube structure. The measurement results were listed in Table 2 below.

### (2) Measurement of Interface Resistance between Electrode Active Material Layer and Electrode Current Collector

The interface resistance between the electrode active material layer and the electrode current collector was measured from the electrode prepared according to each of Examples 1 to 3 and Comparative Examples 1 to 5, using a multi-probe resistance measurement instrument (manufacturer: Hioki, product: RM2510).

In particular, 20 voltage and current probes were evenly distributed on a surface of the electrode active material layer for each electrode, a constant current of 1 mA was applied to the surface of the electrode active material layer to measure the potential distribution occurring on the surface, and the interface resistance values between the electrode active material layer and the electrode current collector was measured to calculate the average value thereof, and then the interface resistance between the electrode active material layer and the electrode current collector in the electrode, prepared according to each of Examples 1 to 3 and Comparative Examples 1 to 5, was measured therefrom. The measurement results were listed in Table 2 below.

**[Table 2]**

| | Average diameter of single-walled carbon nanotube structure [nm] | Interface resistance between electrode active material layer-electrode current collector [Ω·cm²] |
|---|---|---|
| Example 1 | 60 nm | 0.0706 Ω·cm² |
| Example 2 | 70 nm | 0.2316 Ω·cm² |
| Example 3 | 150 nm | 0.327 Ω·cm² |
| Comparative Example 1 | 350 nm | 0.4331 Ω·cm² |
| Comparative Example 2 | 280 nm | 0.4511 Ω·cm² |
| Comparative Example 3 | Due to increase in viscosity, it is impossible to use a high-pressure homogenizer, and impossible to form a sample. | |
| Comparative Example 4 | 40 nm | 0.2749 Ω·cm² |
| Comparative Example 5 | 400 nm | 0.094 Ω·cm² |

Referring to Table 2 above, in the electrode prepared according to each of Examples 1 to 3, the single-walled carbon nanotube structure had an average diameter of 60 nm to 300 nm, and the interface resistance between the electrode active material layer and the electrode current collector was 0.43 Ω·cm² or less. On the contrary, in the electrode prepared according to each of Comparative Examples 1 to 2 and 4 to 5, it can be seen that at least one of the 60 nm to 300 nm average diameter of single-walled carbon nanotube structure or the 0.43 Ω·cm² or less interface resistance between the electrode active material layer and the electrode current collector was not satisfied.

### Experimental Example 2: Evaluation on Electrode Initial Discharge Resistance and Measurement of R Value

Graphite as a negative electrode active material, carbon black as a conductive material, a styrene-butadiene rubber (SBR)/carboxymethyl cellulose (CMC) as a binder were mixed in a weight ratio of 95.5:1.05:3.4 to prepare a negative electrode slurry. The slurry was applied onto a copper (Cu) thin film current collector having a thickness of 15 µm, and dried, and then rolling was performed to prepare a negative electrode including a negative electrode active material layer having a thickness of 70 µm.

A separator was disposed between the positive electrode prepared according to each of Examples 1 to 3 and Comparative Examples 1 to 5 and the negative electrode prepared as above, and an electrode assembly was prepared, the electrode assembly was positioned inside a case for a secondary battery, and then an electrolyte solution was injected into the case to prepare a lithium secondary battery. At this time, ethylene carbonate (EC) and ethylmethyl carbonate (EMC) were mixed in a volume ratio of 3:7, and LiPF₆ was added with 0.7 M to prepare the electrolyte solution.

The lithium secondary battery prepared as above was charged at 25 °C with SOC 50% and discharged with 3 C for 10 seconds, and then, through the amount of voltage drop observed at this time, the initial resistance was calculated, and for the comparison, the values were indexed and expressed on the basis of Comparative Example 1. The results were listed in Table 3 below.

**[Table 3]**

| | Initial discharge resistance[Ω] | Initial discharge resistance index |
|---|---|---|
| Example 1 | 1.37 | 96.48 |
| Example 2 | 1.36 | 95.78 |
| Example 3 | 1.34 | 94.37 |
| Comparative Example 1 | 1.42 | 100.0 |
| Comparative Example 2 | 1.41 | 99.30 |
| Comparative Example 3 | Impossible to | - |
| | measure | |
| Comparative Example 4 | 1.40 | 98.59 |
| Comparative Example 5 | 1.43 | 100.7 |

Referring to Table 3 above, it can be seen that the lithium secondary batteries including the positive electrodes prepared according to Examples 1 to 3 had more excellent initial resistance characteristics than the lithium secondary batteries including the positive electrodes prepared according to Comparative Examples 1 to 5. In particular, it can be seen that the initial discharge resistance was about 5% lower in average in the Examples, compared to the Comparative Examples.

### Experimental Example 3: Evaluation on Capacity Retention Rate

200 cycles of charging and discharging were performed on the lithium secondary battery prepared according to Experimental Example 2 above, where 1 cycle refers to charging at 25 °C with 0.33 C to 4.2 V and then discharging with 0.33 C to 2.3 V, and then the capacity retention rates at 100th cycle and 200th cycle were measured. The measurement results were listed in Table 4 below.

**[Table 4]**

| | Capacity retention rate [%] (@100th cycle, 25 °C) | Capacity retention rate [%] (@200th cycle, 25 °C) |
|---|---|---|
| Example 1 | 90.4 | 88.9 |
| Example 2 | 90.2 | 88.5 |
| Example 3 | 92.0 | 91.0 |
| Comparative Example 1 | 88.0 | 87.5 |
| Comparative Example 2 | 88.9 | 85.2 |
| Comparative Example 3 | Impossible to measure | - |
| Comparative Example 4 | 83.5 | 71.0 |
| Comparative Example 5 | 88.5 | 84.1 |

Referring to Table 4 above, it can be seen that the lithium secondary batteries including the positive electrodes prepared according to Examples 1 to 3 above had more excellent capacity retention rates than the lithium secondary batteries including the positive electrodes prepared according to Comparative Examples 1 to 5 above. In particular, it can be seen that the lithium secondary batteries including the positive electrodes prepared according to Comparative Examples 2, 4, and 5, where at least one of the 60 nm to 300 nm average diameter of the single-walled carbon nanotube structure; and the 0.43 Ω·cm² or less interface resistance between the electrode active material layer and the electrode current collector was not satisfied, had capacity retention rates in a lower level than those of the lithium secondary batteries including the positive electrodes prepared according to Examples 1 to 3. That is, it can be seen that, even though the single-walled carbon nanotube structure had an average diameter of 60 nm to 300 nm, if the interface resistance between the electrode active material layer and the electrode current collector did not satisfy the range according to the present invention, sufficient lifetime characteristics may not be achieved, and no matter how low the interface resistance between the electrode active material layer and the electrode current collector was, if the average diameter of the single-walled carbon nanotube structure did not satisfy the range of 60 nm to 300 nm, sufficient lifetime characteristics may not be achieved.

## Claims

1. An electrode comprising
an electrode current collector, and an electrode active material layer positioned on the electrode current collector,
wherein the electrode active material layer includes an electrode active material, a single-walled carbon nanotube structure, a first dispersant containing a hydrogenated nitrile-based copolymer, and a second dispersant containing a fluorine-based polymer,
the single-walled carbon nanotube structure has an average diameter of 60 nm to 300 nm, and
an interface resistance between the electrode active material layer and the electrode current collector, measured by a multi-probe resistance (MP resistance) measurement method, is 0.43 Ω·cm² or less.

2. The electrode of claim 1, wherein the hydrogenated nitrile-based copolymer has a weight average molecular weight of 5,000 g/mol to 200,000 g/mol.

3. The electrode of claim 1, wherein the hydrogenated nitrile-based copolymer is a hydrogenated nitrile butadiene rubber.

4. The electrode of claim 1, wherein the fluorine-based polymer is one or more selected from the group consisting of poly(vinylidene fluoride) (PVDF) and a poly(vinylidene fluoride-co-hexafluoropropylene) (PVdF-HFP) copolymer.

5. The electrode of claim 1, wherein the second dispersant comprises carboxyl acid, and
the carboxyl acid is included in an amount of 0.1 parts by weight to 2.0 parts by weight on the basis of 100 parts by weight of the second dispersant.

6. The electrode of claim 1, wherein the second dispersant has a weight average molecular weight of 600,000 g/mol to 1,500,000 g/mol.

7. The electrode of claim 1, wherein the single-walled carbon nanotube structure is included in an amount of 0.001 wt% to 0.1 wt% on the basis of a total weight of the electrode active material layer.

8. The electrode of claim 1, wherein the first dispersant is included in an amount of 0.0001 wt% to 0.05 wt% on the basis of a total weight of the electrode active material layer.

9. The electrode of claim 1, wherein the second dispersant is included in an amount of 0.001 wt% to 0.25 wt% on the basis of a total weight of the electrode active material layer.

10. A lithium secondary battery comprising:
a positive electrode; a negative electrode; an electrolyte; and a separator,
wherein at least one of the positive electrode or the negative electrode is the electrode according to any one of claim 1 to claim 9.

11. A preparation method of an electrode, comprising:
preparing a conductive material dispersion liquid including a bundle-type single-walled carbon nanotube, a first dispersant, a second dispersant, and a dispersion medium (S1); and
applying an electrode slurry including the conductive material dispersion liquid and an electrode active material onto an electrode current collector to prepare an electrode including an electrode active material layer (S2),
wherein the first dispersant includes a hydrogenated nitrile-based copolymer,
the second dispersant includes a fluorine-based polymer,
the electrode active material layer includes a single-walled carbon nanotube structure, the first dispersant, the second dispersant, and the electrode active material, and
the single-walled carbon nanotube structure has an average diameter of 60 nm to 300 nm.

12. The preparation method of an electrode of claim 11, wherein the S1 comprises:
preparing a first dispersion liquid including the bundle-type single-walled carbon nanotube, the first dispersant, and the dispersion medium (S1-1); and
preparing the conductive material dispersion liquid in which the second dispersant is mixed in the first dispersion liquid (S1-2).

13. The preparation method of an electrode of claim 11, wherein the S1 comprises:
preparing a first dispersion liquid including the bundle-type single-walled carbon nanotube, the first dispersant, and the dispersion medium (S1-1);
preparing the conductive material dispersion liquid in which the second dispersant is mixed in the first dispersion liquid (S1-2); and
passing the conductive material dispersion liquid through a high-pressure homogenizer (S1-3).

14. The preparation method of an electrode of claim 12, wherein the first dispersion liquid and the conductive material dispersion liquid are mixed and prepared using an inline mixer.

15. The preparation method of an electrode of claim 12, wherein the S1-1 comprises agitating the first dispersion liquid at 500 rpm to 3000 rpm for 15 minutes to 60 minutes.

16. The preparation method of an electrode of claim 12, wherein the S1-2 comprises agitating the conductive material dispersion liquid at 500 rpm to 3000 rpm for 15 minutes to 60 minutes.

17. The preparation method of an electrode of claim 13, wherein the S1-3 comprises applying a pressure of 100 bar to 2500 bar to introduce the conductive material dispersion liquid into an inlet part of the high-pressure homogenizer and pass the conductive material dispersion liquid through a microchannel.
